# EUROPÄISCHE PATENTSCHRIFT

(11) **EP 3 212 481 B1**
(45) Veröffentlichungstag und Bekanntmachung des Hinweises auf die Patenterteilung: **31.07.2024**
(21) Anmeldenummer: 15775157.9
(22) Anmeldetag: 29.09.2015
(51) Int. Cl.: B60W 30/06, G05D 1/00, G08G 1/14

(54) **VERFAHREN UND VORRICHTUNG ZUM FÜHREN EINES FAHRZEUGS AUF EINEM PARKPLATZ**
METHOD AND DEVICE FOR GUIDING A VEHICLE IN A PARKING LOT
PROCÉDÉ ET DISPOSITIF POUR GUIDER UN VÉHICULE JUSQU'À UNE PLACE DE STATIONNEMENT

(30) Priorität: 27.10.2014 DE 102014221751
(43) Veröffentlichungstag der Anmeldung: 06.09.2017
(73) Patentinhaber: Robert Bosch GmbH, 70442 Stuttgart (DE)
(72) Erfinder: MATHONY, Hans-Joerg, 71732 Tamm-Hohenstange (DE); MIELENZ, Holger, 73760 Ostfildern (DE); NICODEMUS, Rolf, 74321 Bietigheim-Bissingen (DE); HOFFMANN, Stefan, 74321 Bietigheim (DE); IRION, Albrecht, 70563 Stuttgart (DE); NORDBRUCH, Stefan, 70806 Kornwestheim (DE)
(86) Internationale Anmeldenummer: PCT/EP2015/072432
(87) Internationale Veröffentlichungsnummer: WO 2016/066362

(56) Entgegenhaltungen:
- DE-A1- 102009 029 117
- DE-A1- 102009 051 463
- DE-A1- 102012 015 968
- DE-A1- 102012 021 282
- DE-A1- 102012 222 562
- DE-T1- 10 081 335

## Beschreibung

Die Erfindung betrifft ein Verfahren sowie eine Vorrichtung zum Führen eines Fahrzeugs auf einem Parkplatz. Die Erfindung betrifft ferner ein Parksystem für Fahrzeuge sowie ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Die Offenlegungsschrift DE 10 2009 051 463 A1 zeigt ein Kraftfahrzeug, eine externe Steuerungsvorrichtung sowie ein Verfahren zum Durchführen eines Ausparkvorgangs eines Kraftfahrzeugs.

Die Offenlegungsschrift DE 10 2012 021 282 A1 zeigt ein Verfahren zur Koordination des Betriebs von vollautomatisiert fahrenden Kraftfahrzeugen.

Die Veröffentlichung DE 100 81 335 T1 der internationalen Anmeldung mit der Veröffentlichungs-Nr. WO 00/66975 offenbart ein Routenleitsystem.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Mit heutigen bzw. kurzfristig in den Markt eingeführten Fahrzeugen ist ein solches Valet Parking in der Regel allerdings nicht durchführbar oder allenfalls nur technisch sehr aufwendig durchführbar, da das Fahrzeug hierfür eine Vielzahl von Zusatzsystemen (Steuergeräte, Sensoren) und Daten benötigt, die in diesen Fahrzeugen üblicherweise nicht zur Verfügung stehen werden.

### Offenbarung der Erfindung

Die der Erfindung zugrunde liegende Aufgabe kann daher darin gesehen werden, ein Verfahren zum Führen eines Fahrzeugs auf einem Parkplatz bereitzustellen, welches es ermöglicht, dass auch Fahrzeuge, die solche Zusatzsysteme nicht aufweisen, dennoch auf dem Parkplatz autonom fahren können.

Die der Erfindung zugrunde liegende Aufgabe kann auch darin gesehen werden, eine entsprechende Vorrichtung zum Führen eines Fahrzeugs auf einem Parkplatz bereitzustellen.

Die der Erfindung zugrunde liegende Aufgabe kann des Weiteren darin gesehen werden, ein entsprechendes Parksystem für Fahrzeuge bereitzustellen.

Die der Erfindung zugrunde liegende Aufgabe kann des Weiteren darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Die Erfindung wird durch das Verfahren und die Vorrichtung gemäß der unabhängigen Ansprüche definiert.

Gemäß einem Aspekt wird ein Parksystem für Fahrzeuge bereitgestellt, wobei das Parksystem einen Parkplatz umfasst, der einen oder mehrere Parkpositionen aufweist, wobei das Parksystem die erfindungsgemäße Vorrichtung zum Führen eines Fahrzeugs auf einem Parkplatz umfasst.

Nach einem anderen Aspekt wird ein Computerprogramm bereitgestellt, welches Programmcode zur Durchführung des erfindungsgemäßen Verfahrens zum Führen eines Fahrzeugs auf einem Parkplatz umfasst, wenn das Computerprogramm auf einem Computer ausgeführt wird.

Die Erfindung umfasst also insbesondere den Gedanken, dem Fahrzeug lediglich zumindest ein Teilstück der Route zur Verfügung zu stellen, so dass das Fahrzeug zunächst lediglich das Teilstück der Route auf dem Parkplatz autonom abfahren kann. Denn in der Regel ist es so, dass bekannte Fahrzeuge mittels den ihm zur Verfügung stehenden Fahrerassistenzsystemen durchaus in der Lage sind, ein Teilstück einer Route autonom abzufahren, nicht jedoch die gesamte Route auf einmal. Dadurch werden also solche Fahrzeuge in vorteilhafter Weise in die Lage versetzt, autonom auf einem Parkplatz zu fahren, ohne dass diese Fahrzeuge hier irgendein Wissen über den Parkplatz aufweisen müssen. Ein Wissen über einen Parkplatz umfasst beispielsweise eine Topografie des Parkplatzes, die in der Regel mittels einer digitalen Karte repräsentiert werden kann. Das heißt also, dass das Fahrzeug nicht wissen muss, wo sich beispielsweise eine Einfahrt befindet. Insbesondere muss das Fahrzeug nicht wissen, wo sich eventuelle Hindernisse auf dem Parkplatz befinden. Auch muss sich das Fahrzeug selbst nicht in vorteilhafter Weise im Parkplatz lokalisieren. Es muss also überhaupt kein Wissen aufweisen. Das Wissen steht fahrzeugextern zur Verfügung respektive wird fahrzeugextern ermittelt und dem Fahrzeug in Form eines Teilstücks zur Verfügung gestellt.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers, navigiert oder fährt. Das Fahrzeug fährt also selbstständig auf dem Parkplatz, ohne dass ein Fahrer hierfür das Fahrzeug steuern oder sich im Fahrzeug befinden müsste. Ein solch autonom fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Nach einer Ausführungsform umfasst das Kommunikationsnetzwerk ein WLAN-Netzwerk und/oder ein Mobilfunknetzwerk.

Eine Abgabeposition im Sinne der vorliegenden Erfindung ist eine Position, an welcher ein Fahrer des Fahrzeugs sein Fahrzeug für einen autonomen Parkvorgang abstellen kann und von dieser sein Fahrzeug zu einem späteren Zeitpunkt wieder abholen kann.

Eine Parkposition im Sinne der vorliegenden Erfindung ist eine Position, an welcher das Fahrzeug autonom parken soll.

In einer Ausführungsform ist vorgesehen, dass das Fahrzeug autonom von der Abgabeposition zu der Parkposition navigiert oder fährt.

In einer weiteren Ausführungsform ist vorgesehen, dass das Fahrzeug autonom in die Parkposition einparkt.

In einer anderen Ausführungsform ist vorgesehen, dass das Fahrzeug autonom aus der Parkposition ausparkt.

Nach einer weiteren Ausführungsform ist vorgesehen, dass das Fahrzeug autonom von der Parkposition zu der Abgabeposition navigiert oder fährt.

Erfindungsgemäß ist vorgesehen, dass bei einer Abweichung eine Ausgleichsroute zum Ausgleichen der Abweichung ermittelt wird, wobei die Ausgleichsroute über das Kommunikationsnetzwerk an das Fahrzeug gesendet wird, so dass das Fahrzeug mittels Abfahren der Ausgleichsroute die Abweichung ausgleichen kann. Dadurch wird insbesondere der technische Vorteil bewirkt, dass eine Abweichung ausgeglichen werden kann. Denn in der Regel ist es so, dass das abgefahrene Teilstück aufgrund von Ungenauigkeiten in den Umfeldsensoren des Fahrzeugs, Algorithmen und/oder Aktuatoren in der Regel Abweichungen aufweist. Das heißt also, dass das Fahrzeug nicht exakt das ihm vorgegebene Teilstück abgefahren ist. Es liegt also eine Abweichung zwischen der Ist-Strecke und der Soll-Strecke, also zwischen dem Ist-Teilstück und dem Soll-Teilstück, vor. Diese Abweichung kann aber mittels der Ausgleichsroute kompensiert oder ausgeglichen werden. Das heißt also, dass das Überwachungssystem erkennt, wenn das Fahrzeug nicht das vorgegebene Teilstück abgefahren ist, das Überwachungssystem erkennt also die Abweichung.

Alternativ oder zusätzlich ist vorgesehen, dass bei einer Abweichung ein Stoppsignal über das Kommunikationsnetzwerk an das Fahrzeug gesendet wird, so dass das Fahrzeug ansprechend auf einen Empfang des Stoppsignals stoppen kann. Dadurch wird insbesondere der technische Vorteil bewirkt, dass ein Kollisionsrisiko vermindert werden kann, insofern ein gestopptes Fahrzeug nicht mehr selbst gegen andere Objekte oder Hindernisse im Umfeld des Fahrzeugs fahren kann.

Erfindungsgemäß ist vorgesehen, dass Teilstücke der Route sukzessive über das Kommunikationsnetzwerk an das Fahrzeug gesendet werden, so dass das Fahrzeug die Route stückweise abfahren kann. Das heißt also insbesondere, dass das Fahrzeug die Route stückweise abfahren kann. Sukzessive kann hier insbesondere bedeuten, dass, erst nachdem das Fahrzeug das Teilstück abgefahren hat, ihm ein weiteres Teilstück, welches dem soeben abgefahrenen Teilstück unmittelbar folgt, zur Verfügung gestellt wird. Durch das sukzessive Abfahren der einzelnen Teilstücke gelangt dann das Fahrzeug in vorteilhafter Weise von der Startposition zu der Zielposition. Im Ganzen werden also erfindungsgemäß sämtliche Teilstücke, die die komplette Route bilden, dem Fahrzeug nacheinander, also sukzessive, zur Verfügung gestellt. Das heißt also, dass die Route in Teilstücke unterteilt wird, die dem Fahrzeug sukzessive, also nacheinander, zur Verfügung gestellt werden. Zur Verfügung gestellt werden heißt hier insbesondere, dass die Teilstücke über das Kommunikationsnetzwerk an das Fahrzeug gesendet werden.

Erfindungsgemäß ist die jeweilige Länge der Teilstücke abhängig von einem Schwierigkeitsgrad betreffend das Abfahren des Teilstücks. Zum Beispiel ist ein gerades Teilstück länger als ein kurviges Teilstück. Die Länge ist damit abhängig vom dem aktuellen Fahrtroutenteilstück bzw. der Fahrtroutenkomplexität.

In einer anderen Ausführungsform ist die jeweilige Länge der Teilstücke abhängig von einem Fähigkeitsmaß des Fahrzeuges betreffend der Aufgabe des autonomen Fahrens. Das Fähigkeitsmaß basiert insbesondere auf Fähigkeiten oder Funktionen der Regler, der Sensoren und der Aktuatoren. Das heißt also, dass die jeweilige Länge in Abhängigkeit von den Fähigkeiten des Fahrzeugs gewählt wird, in wieweit es autonom oder gut es autonom fahren kann.

Nach einer anderen Ausführungsform ist die jeweilige Länge der Teilstücke abhängig von einer Verkehrsdichte respektive Objektdichte. Das heißt, wenn sich viele Fahrzeuge um das Fahrzeug befinden, dann sind die Teilstücke kürzer als wenn sich bezogen auf die vielen Fahrzeuge weniger Fahrzeuge um das Fahrzeug befinden. Das heißt, dass die Länge in Abhängigkeit der Umgebung gewählt wird.

In einer anderen Ausführungsform ist vorgesehen, dass eine Einparkroute zum Einparken und/oder eine Ausparkroute zum Ausparken in respektive aus einer Parkposition fahrzeugextern ermittelt und über das Kommunikationsnetzwerk an das Fahrzeug gesendet wird respektive werden, so dass das Fahrzeug in die respektive aus der Parkposition autonom einparken respektive autonom ausparken kann. Dadurch wird insbesondere der technische Vorteil bewirkt, dass das Fahrzeug selbst nicht notwendigerweise einen Parkassistenten aufweisen muss. Das heißt also, dass das Fahrzeug selbst keine autonome Parkfunktionalität aufweisen muss. Denn die Route, die benötigt wird, damit das Fahrzeug durch Abfahren dieser Route ein- oder ausparken kann, wird fahrzeugextern ermittelt. Das Fahrzeug selbst muss also kein Wissen über genaue Abmaßungen der Parkposition haben. Insbesondere muss das Fahrzeug kein Wissen über eventuelle Hindernisse im Umfeld der Parkposition haben. Das Wissen steht also fahrzeugextern zur Verfügung und wird dem Fahrzeug in Form der Ein- oder Ausparkroute über das Kommunikationsnetzwerk zur Verfügung gestellt.

In einer anderen Ausführungsform ist vorgesehen, dass das Fahrzeug selbstständig, also autonom oder vollautomatisiert, ein- oder ausparkt. In dieser Ausführungsform ist also nicht vorgesehen, dass dem Fahrzeug eine Ein- oder Ausparkroute zur Verfügung gestellt wird. Das Fahrzeug wird lediglich an die Parkposition geführt oder an die Abgabeposition geführt. Das Ein- oder Ausparken führt das Fahrzeug selbst durch, insbesondere ermittelt es sich selbst die hierfür notwenige Ein- oder Ausparkroute.

In einer anderen Ausführungsform ist vorgesehen, dass zusätzlich eine Rückfahrroute zurück von der Zielposition zu der Startposition fahrzeugextern ermittelt wird, wobei zumindest ein Teilstück der Rückfahrroute über das Kommunikationsnetzwerk an das Fahrzeug gesendet wird, wobei das Fahrzeug beim autonomen Abfahren des Teilstücks der Rückfahrroute mittels des fahrzeugexternen Überwachungssystems auf eine Abweichung beim Abfahren des Teilstücks überwacht wird. Dadurch wird insbesondere der technische Vorteil bewirkt, dass das Fahrzeug auch zurück zu der Startposition geführt werden kann. Die im Zusammenhang mit der Route von der Start- zur Zielposition gemachten Ausführungen gelten analog auch für die Rückfahrroute. Das heißt also, dass auch für die Rückfahrroute insbesondere entsprechend eine Ausgleichsroute bei einer Abweichung ermittelt werden kann. Insbesondere kann auch bei einer Abweichung beim Abfahren der Rückfahrroute ein Stoppsignal an das Fahrzeug gesendet werden. Auch das sukzessive Senden der Teilstücke der Rückfahrroute ist nach einer Ausführungsform analog vorgesehen.

In einer anderen Ausführungsform ist vorgesehen, dass die Startposition eine Abgabeposition ist, an welcher ein Fahrer sein Fahrzeug für einen automatischen Parkvorgang abstellen kann, und die Zielposition eine Parkposition ist, an welcher das Fahrzeug automatisch parken kann, oder umgekehrt. Dadurch wird insbesondere der technische Vorteil bewirkt, dass ein automatischer Einparkvorgang für das Fahrzeug auf dem Parkplatz bewirkt werden kann. Das heißt also insbesondere, dass hier das sogenannte Valet Parking automatisch durchgeführt werden kann.

Funktionalitäten der Vorrichtung ergeben sich in analoger Weise aus Funktionalitäten des Verfahrens und umgekehrt. Das heißt also, dass sich Vorrichtungsmerkmale unmittelbar aus den Verfahrensmerkmalen ergeben und umgekehrt.

Erfindungsgemäß ist die Vorrichtung ausgebildet, das erfindungsgemäße Verfahren aus- oder durchzuführen.

Die Erfindung wird im Folgenden anhand von bevorzugten Ausführungsbeispielen näher erläutert. Hierbei zeigen
- Fig. 1: ein Ablaufdiagramm eines Verfahrens zum Führen eines Fahrzeugs auf einem Parkplatz,
- Fig. 2: eine Vorrichtung zum Führen eines Fahrzeugs auf einem Parkplatz,
- Fig. 3: ein Parksystem für Fahrzeuge und
- Fig. 4-10: jeweils einen Zeitpunkt einer Durchführung eines automatischen Parkvorgangs.

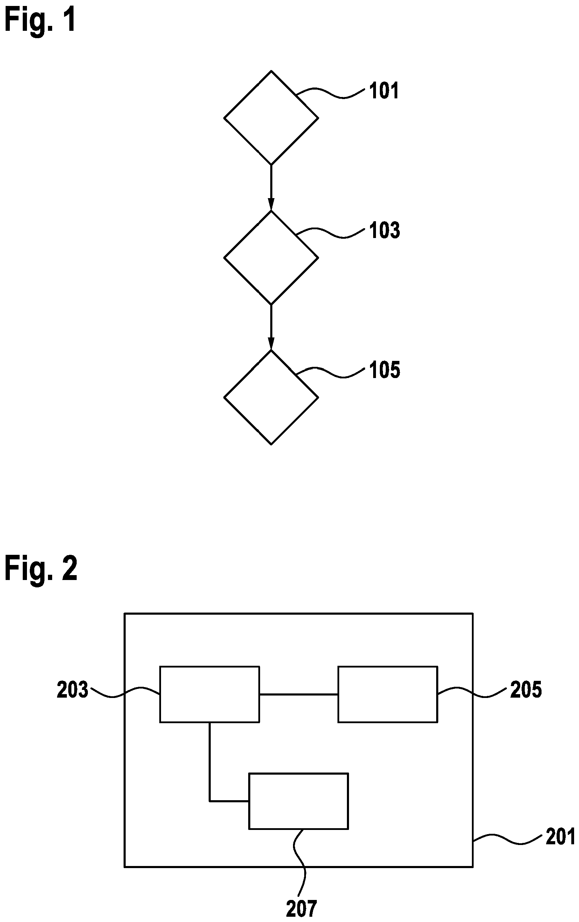

Fig. 1 zeigt ein Ablaufdiagramm eines Verfahrens zum Führen eines Fahrzeugs auf einem Parkplatz.

Gemäß einem Schritt 101 wird eine Route auf dem Parkplatz von einer Startposition zu einer Zielposition fahrzeugextern ermittelt. In einem Schritt 103 wird zumindest ein Teilstück der Route an das Fahrzeug über ein Kommunikationsnetzwerk gesendet. Gemäß einem Schritt 105 wird das Fahrzeug beim Abfahren des Teilstücks auf eine Abweichung beim autonomen Abfahren des Teilstücks mittels eines fahrzeugexternen Überwachungssystems überwacht. Das Fahrzeug wird somit fahrzeugextern geführt, also ferngesteuert.

Durch den erfindungsgemäßen Schritt des Überwachens wird insbesondere der technische Vorteil bewirkt, dass erkannt werden kann, wenn Probleme oder gefährliche Situationen auftreten. Beispielsweise kann erkannt werden, wenn das Fahrzeug nicht auf dem vorgegebenen Teilstück autonom fährt.

Fig. 2 zeigt eine Vorrichtung 201 zum Führen eines Fahrzeugs auf einem Parkplatz.

Die Vorrichtung 201 umfasst einen Prozessor 203, der ausgebildet ist, eine Route auf dem Parkplatz von einer Startposition zu einer Zielposition zu ermitteln. Des Weiteren umfasst die Vorrichtung 201 eine Kommunikationsschnittstelle 205, die ausgebildet ist, zumindest ein Teilstück der Route an das Fahrzeug über eine Kommunikationsnetzwerk zu senden. Die Vorrichtung 201 umfasst ferner ein Überwachungssystem 207, das ausgebildet ist, das Fahrzeug beim autonomen Abfahren des Teilstücks auf eine Abweichung beim Fahren des Teilstücks zu überwachen.

Die Vorrichtung 201 ist nach einer Ausführungsform ausgebildet, das erfindungsgemäße Verfahren, insbesondere das Verfahren gemäß Fig. 1, aus- oder durchzuführen.

Die Vorrichtung ist eine fahrzeugexterne Vorrichtung, also selbst nicht im Fahrzeug vorhanden oder angeordnet. Es ist somit eine fahrzeugexterne Fernsteuerung des Fahrzeugs ermöglicht. Dem Fahrzeug wird hierbei gesagt, wie es auf dem Parkplatz zu fahren hat. Das Fahrzeug muss somit einfach nur das vorgegebene Teilstück abfahren, um auf dem Parkplatz autonom fahren zu können. Es muss für seine autonome Fahrt kein Wissen über den Parkplatz haben. Insbesondere muss das Fahrzeug für seine autonome Fahrt auf dem Parkplatz keine Lokalisierung von sich selbst auf dem Parkplatz durchführen. Denn dies ist in der Regel nur schwer möglich, da üblicherweise für eine Lokalisierung eine Sichtverbindung zu Satelliten, beispielsweise GPS-Satelliten, vorhanden sein muss. Dies ist in der Regel auf Parkplätzen, insbesondere in Parkhäusern oder Parkgaragen, nicht der Fall.

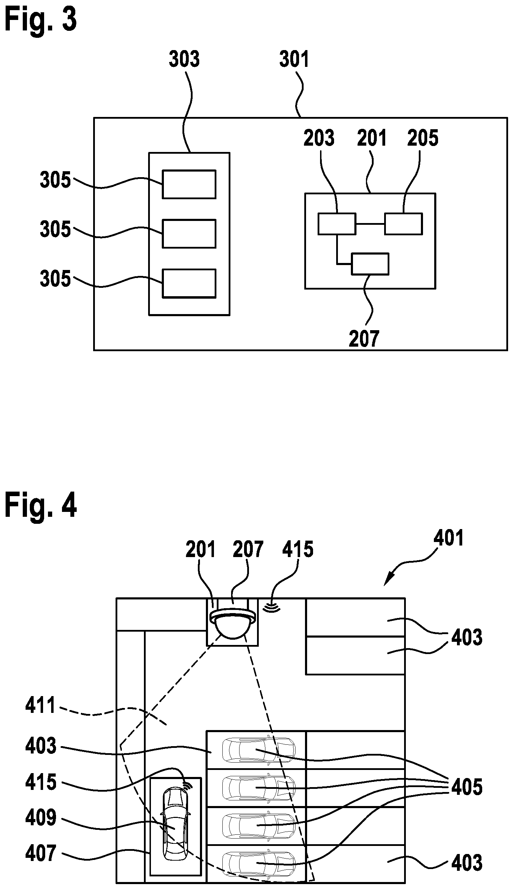

Fig. 3 zeigt ein Parksystem 301 für Fahrzeuge.

Das Parksystem 301 umfasst einen Parkplatz 303. Der Parkplatz umfasst eine oder mehrere Parkpositionen 305. Das Parksystem 301 umfasst ferner die Vorrichtung 201 der Fig. 2.

Die Fig. 4 bis 10 zeigen jeweils einen Zeitpunkt bei einer Durchführung eines automatischen Parkvorgangs, eines sogenannten Automatic Valet Parking.

Gezeigt ist in den Figuren ein Parkplatz 401 umfassend mehrere Parkpositionen 403, die Parkständen oder Abstellflächen entsprechen. An diesen Parkpositionen 403 können also Fahrzeuge parken. Die geparkten Fahrzeuge 405 sind beispielsweise AVP-Fahrzeuge.

An einer Abgabeposition 407 ist ein AVP-Fahrzeug 409 abgestellt worden. Dieses soll nun zu seiner ihm zugewiesenen Parkposition fahren.

Fig. 4 zeigt das Fahrzeug 409, welches auf der Abgabeposition 407 abgestellt ist. Es ist die erfindungsgemäße Vorrichtung 201 vorgesehen, wobei hier zur Übersicht halber nur das Überwachungssystem 207 gezeigt ist. Die weiteren Elemente der Vorrichtung 201 sind der Übersicht halber nicht gezeigt.

Das Überwachungssystem 207 umfasst nach einer Ausführungsform eine oder mehrere Kameras, insbesondere Videokameras. Das Überwachungssystem 207 umfasst nach einer weiteren Ausführungsform einen oder mehrere Radarsensoren.

Die Vorrichtung 201 detektiert also mittels des Überwachungssystems 207 die Anwesenheit des AVP-Fahrzeugs 409 an der Abgabeposition 407.

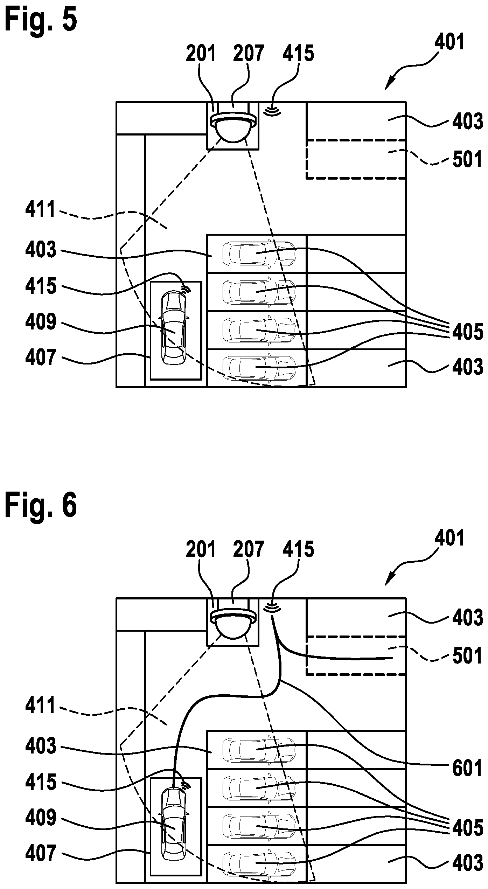

Die Vorrichtung 201 ermittelt also im Folgenden eine Parkposition für das Fahrzeug 409, die in Fig. 5 gestrichelt und mit dem Bezugszeichen 501 dargestellt respektive versehen ist.

Ein beispielhafter Erfassungswinkel des Überwachungssystems 207 ist symbolisch mit einem Kegel mit dem Bezugszeichen 411 dargestellt. Die Kommunikation zwischen der Vorrichtung 201 und dem Fahrzeug 409 wird insbesondere über ein drahtloses Kommunikationsnetzwerk, insbesondere WLAN, durchgeführt. Dies ist symbolisch mit einem entsprechenden Piktogramm dargestellt, auf welches das Bezugszeichen 415 zeigt.

Die Vorrichtung 201 ermittelt ferner einen Weg oder einen Pfad oder eine Route von der Abgabeposition 407 zu der Parkposition 501. Die Route ist gemäß Fig. 6 mit dem Bezugszeichen 601 gekennzeichnet.

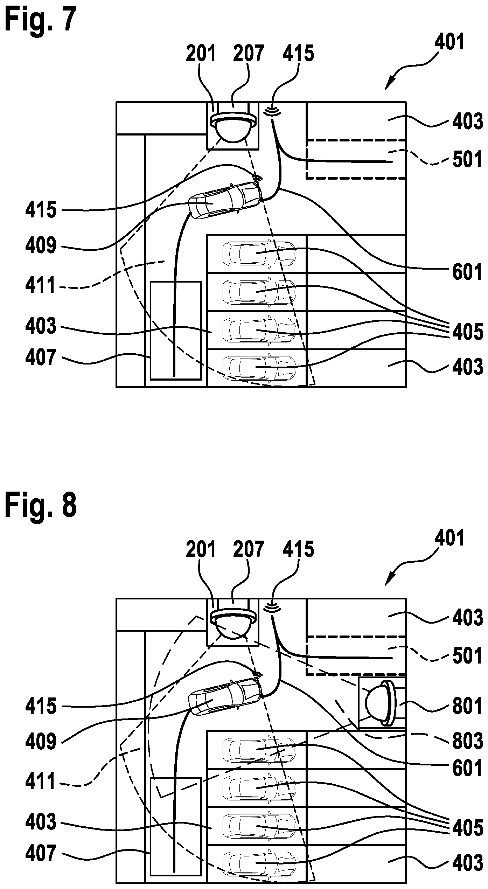

Es ist vorgesehen, dass die ermittelte Route 601 in Teilstücke aufgeteilt wird, die an das Fahrzeug gesendet werden, insbesondere sukzessive an das Fahrzeug gesendet werden. Fig. 7 zeigt, wie das Fahrzeug 409 nun die ermittelte Route 601 stückweise abfährt. Hierbei wird es während des Abfahrens mittels des Überwachungssystems 207 überwacht. Fig. 8 zeigt beispielhaft eine Überwachungskamera 801 auf dem Parkplatz 401, die einen entsprechenden Erfassungswinkel 803 aufweist, innerhalb welchem das Fahrzeug 409 mittels der Überwachungskamera 801 erfasst werden kann. Eine Überwachungskamera im Sinne der vorliegenden Erfindung ist insbesondere eine Videokamera.

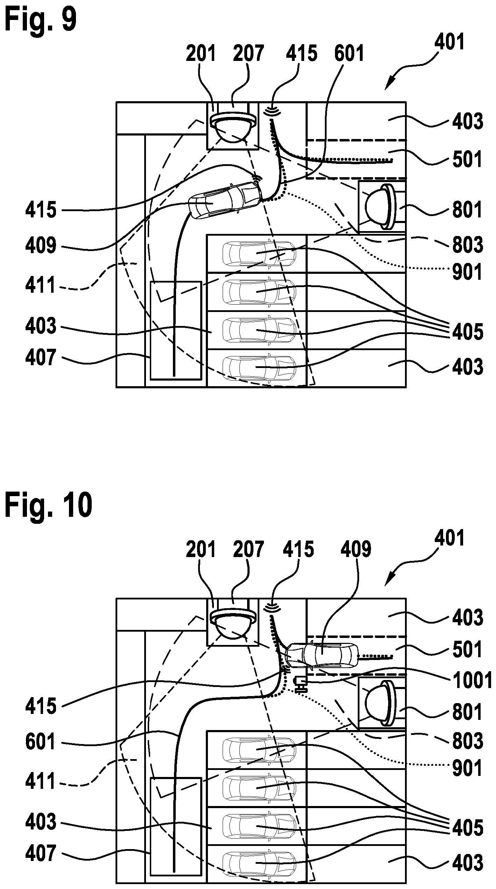

Sofern mittels des Überwachungssystems 207 eine Abweichung beim Abfahren der Route 601 festgestellt wurde, berechnet oder ermittelt die Vorrichtung 201 einen Ausgleichspfad oder eine Ausgleichsroute. Dies ist in Fig. 9 gezeigt, wobei die Ausgleichsroute mit dem Bezugszeichen 901 versehen ist.

Ein Einparkvorgang, wie in Fig. 10 gezeigt, kann durch ein Parkassistenzsystem, also durch das Fahrzeug selbst, nach einer Ausführungsform durchgeführt werden. Hierfür umfasst das Fahrzeug zum Beispiel eine symbolisch dargestellte Umfeldsensorik 1001 umfassend beispielsweise einen oder mehrere Radarsensoren und/oder einen oder mehrere Ultraschallsensoren. In einer anderen Ausführungsform kann alternativ die Vorrichtung 201 die Berechnung oder das Ermitteln der entsprechenden Einparkroute übernehmen. Gleiches gilt auch für das Ausparken.

Der Weg zurück von der Parkposition 501 zu der Abgabeposition 407 wird in analoger Weise durchgeführt. Auch hier wird dann eine entsprechende Rückfahrroute ermittelt und das Fahrzeug beim stückweise Abfahren der Rückfahrroute überwacht und gegebenenfalls werden entsprechende Ausgleichspfade oder Ausgleichsrouten bei Bedarf berechnet und an das Fahrzeug übertragen.

Die Erfindung umfasst also insbesondere den Gedanken, ein technisches Konzept bereitzustellen, mit der ein vollautomatisches (autonomes) Valet Parking mit Fahrzeugen, die lediglich mit heute bereits bekannten Fahrerassistenzsystemen ausgerüstet sind, durchgeführt werden kann. Der erfindungsgemäße Gedanke umfasst hier insbesondere den Gedanken, dass das Fahrzeug ferngesteuert wird, insbesondere mittels der Vorrichtung 201, die beispielsweise von einem Parkraummanagementsystem oder einem Parkraumverwaltungssystem umfasst sein kann. Ein Parkraumverwaltungssystem koordiniert unter anderem eine Vergabe der Parkpositionen.

Das heißt also insbesondere, dass ein Wissen über die Zielposition (Parkbucht / Parkposition), einen dorthin abzufahrenden Weg zur Zielposition oder auch zurück zur Abgabeposition, eine Position des Fahrzeugs innerhalb des Parkplatzes, beispielsweise innerhalb des Parkhauses, und eine Interpretation und Reaktionsauswahl / Generierung bei Sondersituationen nur die Vorrichtung aufweisen muss. Das Fahrzeug selbst fährt nur jeweils den vorgegebenen Weg (Pfad) oder Route ab, ohne dabei selbst seine genaue Position zu kennen oder kennen zu müssen. Der abzufahrende Weg oder die abzufahrende Route wird erfindungsgemäß durch eine Vielzahl von Teilstücken (Einzelteilstücken) der Route oder des Weges repräsentiert. Das heißt also, dass dem Fahrzeug vorzugsweise immer wieder Teilabschnitte (Teilstücke) des gesamten Weges von der Abgabeposition (auch Abgabestelle genannt) zur Parkposition (zum Beispiel zur Parkbucht) oder von der Parkposition (Parkbucht) zur Abgabestelle von der Vorrichtung, insbesondere vom Parkraummanagement oder von der Parkraumverwaltung, übergeben werden.

Dies ist technisch sinnvoll, da aktuell bekannte Fahrzeugsysteme in der Regel nur kurze Wege abfahren können und abgefahrene Wege aufgrund von Ungenauigkeiten in den Sensoren, Algorithmen, Aktuatoren in der Regel Abweichungen aufweisen.

Es ist hierbei nach einer Ausführungsform vorgesehen, dass die autonome Fahrt des Fahrzeugs die ganze Zeit überwacht wird. Insbesondere wird eine Position des Fahrzeugs bei seiner autonomen Fahrt ermittelt. Das heißt also, dass das Fahrzeug lokalisiert wird. Dies insbesondere mittels des Überwachungssystems, das beispielsweise Videokameras umfassen kann. Das Überwachungssystem kann insbesondere als eine Parkraumüberwachung bezeichnet werden.

Wird hierbei festgestellt, dass das Fahrzeug den Weg nicht genau abfährt (Differenz zwischen Soll und Ist), dann wird nach einer Ausführungsform eine Korrektur oder Ausgleichsstrecke/-route für das Fahrzeug berechnet und dem Fahrzeug über das Kommunikationsnetzwerk zur Verfügung gestellt.

Weiterhin kann nach einer Ausführungsform vorzugsweise das Parkplatzmanagementsystem gegebenenfalls bei einer blockierten Strecke (zum Beispiel Gegenstände auf dem Weg) einen Weg um das entsprechende Hindernis berechnen oder ermitteln und so das Fahrzeug um das Hindernis führen. Das heißt also, dass nach einer Ausführungsform im Fall eines Hindernisses auf der Route eine Umfahrroute zum Umfahren des Hindernisses fahrzeugextern ermittelt wird, wobei das Fahrzeug basierend auf der Umfahrroute um das Hindernis herumgeführt wird.

Des Weiteren ist vorgesehen, dass nach einer Ausführungsform die Vorrichtung die Fahrt gegebenenfalls bei Sondersituationen durch ein Stoppsignal unterbricht.

Das Abfahren eines Teilweges oder eines Teilstücks ist mit heutigen am Markt verfügbaren Assistenzsystemen (inklusive den Wegplanungssystemen) respektive der nächsten Generation in der Regel möglich.

Ein Einparkvorgang in die Parkbucht / Parkposition ist nach einer Ausführungsform mittels eines Parkassistenten / Einparksystems vorgesehen. Das heißt insbesondere, dass das Parkmanagementsystem das Fahrzeug nur den Weg bis zur Parkposition führt und dort übergibt das Parkmanagementsystem dem Fahrzeug die Position der Parklücke, genauer an das Parkassistenzsystem im Fahrzeug, welches dann das Einparken übernimmt. Entsprechend ist insbesondere vorgesehen, dass das Fahrzeug mittels des Parkassistenzsystem aus der Parkposition autonom ausparkt.

In einer weiteren Ausführungsform wird dies mittels der Vorrichtung, insbesondere mittels des Parkmanagementsystems, übernommen, also die Berechnung des Einparkvorgangs. Analog gilt dies natürlich auch für den Ausparkvorgang.

Nach einer Ausführungsform ist vorgesehen, dass die Kommunikation über das Kommunikationsnetzwerk verschlüsselt wird. Insbesondere wird die Kommunikation über C2X-Systeme durchgeführt. "C2X" steht hier für "Car-to-Infrastructure", also einer Kommunikation zwischen einem Fahrzeug und einer feststehenden Infrastruktur.

Der erfindungsgemäße Vorteil ist also insbesondere darin zu sehen, dass ein autonomes Valet Parking mit heute bekannten Fahrzeugen durchgeführt werden kann.

In einer anderen Ausführungsform ist vorgesehen, dass das Parkhaus/der Parkplatz für das vollautomatische oder autonome Valet Parking einen eigenen Bereich reserviert hat. Dadurch können in vorteilhafter Weise mögliche Probleme durch einen Mischverkehr (AVP-Fahrzeuge und normale Fahrzeuge) und/oder durch Fußgänger umgangen werden. Das heißt, dass nach einer Ausführungsform der Parkplatz einen reservierten Bereich für autonom fahrende Fahrzeug aufweist.

## Patentansprüche

1. Verfahren zum Führen eines Fahrzeugs (409) auf einem Parkplatz, wobei
- eine Route (601) auf dem Parkplatz (303, 401) von einer Startposition zu einer Zielposition (501) fahrzeugextern ermittelt (101) wird, wobei
- zumindest ein Teilstück der Route (601) an das Fahrzeug (409) über ein Kommunikationsnetzwerk gesendet (103) wird, wobei
- das Fahrzeug (409) beim Abfahren des Teilstücks auf eine Abweichung beim autonomen Abfahren des Teilstücks mittels eines fahrzeugexternen Überwachungssystems (207) überwacht (105) wird,
- wobei sämtliche Teilstücke der Route (601) sukzessive über das Kommunikationsnetzwerk an das Fahrzeug (409) gesendet werden, so dass das Fahrzeug (409) die Route (601) stückweise abfahren kann, wobei die sämtlichen Teilstücke die komplette Route (601) bilden, wobei .
bei einer Abweichung eine Ausgleichsroute (901) zum Ausgleichen der Abweichung ermittelt wird, wobei die Ausgleichsroute (901) über das Kommunikationsnetzwerk an das Fahrzeug (409) gesendet wird, so dass das Fahrzeug (409) mittels Abfahren der Ausgleichsroute (901) die Abweichung ausgleichen kann und/oder.
wobei bei einer Abweichung ein Stoppsignal über das Kommunikationsnetzwerk an das Fahrzeug (409) gesendet wird, so dass das Fahrzeug (409) ansprechend auf einen Empfang des Stoppsignals stoppen kann,
wobei die jeweilige Länge der Teilstücke abhängig von einem Schwierigkeitsgrad betreffend das Abfahren des Teilstücks ist.

2. Verfahren nach Anspruch 1, wobei eine Einparkroute zum Einparken und/oder eine Ausparkroute zum Ausparken in respektive aus einer Parkposition (305, 403, 501) fahrzeugextern ermittelt und über das Kommunikationsnetzwerk an das Fahrzeug (409) gesendet wird respektive werden, so dass das Fahrzeug (409) in die respektive aus der Parkposition (305, 403, 501) autonom einparken respektive autonom ausparken kann.

3. Verfahren nach einem der vorherigen Ansprüche, wobei zusätzlich eine Rückfahrroute zurück von der Zielposition (501) zu der Startposition fahrzeugextern ermittelt wird, wobei zumindest ein Teilstück der Rückfahrroute über das Kommunikationsnetzwerk an das Fahrzeug (409) gesendet wird, wobei das Fahrzeug (409) beim autonomen Abfahren des Teilstücks der Rückfahrroute mittels des fahrzeugexternen Überwachungssystems (207) auf eine Abweichung beim Abfahren des Teilstücks überwacht wird.

4. Verfahren nach einem der vorherigen Ansprüche, wobei die Startposition eine Abgabeposition (407) ist, an welcher ein Fahrer sein Fahrzeug (409) für einen automatischen Parkvorgang abstellen kann, und die Zielposition (501) eine Parkposition (303, 403) ist, an welcher das Fahrzeug (409) automatisch parken kann, oder umgekehrt.

5. Verfahren nach Anspruch 4, wobei das Fahrzeug (409) ferngesteuert von der Abgabeposition zur Parkposition geführt wird und/oder umgekehrt.

6. Verfahren nach einem der vorherigen Ansprüche, wobei das Fahrzeug (409) autonom in die Parkposition einparkt und/oder autonom aus der Parkposition ausparkt.

7. Verfahren nach einem der vorherigen Ansprüche, wobei im Fall eines Hindernisses auf der Route (601) eine Umfahrroute zum Umfahren des Hindernisses fahrzeugextern ermittelt wird, wobei das Fahrzeug (409) basierend auf der Umfahrroute um das Hindernis herumgeführt wird.

8. Vorrichtung (201) zum Führen eines Fahrzeugs (409) auf einem Parkplatz, umfassend:
- einen Prozessor (203), der ausgebildet ist, eine Route (601) auf dem Parkplatz (303, 401) von einer Startposition zu einer Zielposition (501) zu ermitteln,
- eine Kommunikationsschnittstelle (205), die ausgebildet ist, zumindest ein Teilstück der Route (601) an das Fahrzeug (409) über ein Kommunikationsnetzwerk zu senden, und
- ein Überwachungssystem (207), das ausgebildet ist, das Fahrzeug (409) beim autonomen Abfahren des Teilstücks auf eine Abweichung beim Abfahren des Teilstücks zu überwachen,
- wobei sämtliche Teilstücke der Route (601) sukzessive über das Kommunikationsnetzwerk an das Fahrzeug (409) gesendet werden, so dass das Fahrzeug (409) die Route (601) stückweise abfahren kann, wobei die sämtlichen Teilstücke die komplette Route (601) bilden, wobei
- bei einer Abweichung eine Ausgleichsroute (901) zum Ausgleichen der Abweichung ermittelt wird, wobei die Ausgleichsroute (901) über das Kommunikationsnetzwerk an das Fahrzeug (409) gesendet wird, so dass das Fahrzeug (409) mittels Abfahren der Ausgleichsroute (901) die Abweichung ausgleichen kann und/oder.
- wobei bei einer Abweichung ein Stoppsignal über das Kommunikationsnetzwerk an das Fahrzeug (409) gesendet wird, so dass das Fahrzeug (409) ansprechend auf einen Empfang des Stoppsignals stoppen kann,
- wobei die jeweilige Länge der Teilstücke abhängig von einem Schwierigkeitsgrad betreffend das Abfahren des Teilstücks ist.

9. Parksystem (301) für Fahrzeuge (409), umfassend einen Parkplatz, der eine oder mehrere Parkpositionen (303, 403) aufweist, und die Vorrichtung (201) nach Anspruch 8.

10. Parksystem (301) nach Anspruch 9, wobei der Parkplatz einen reservierten Bereich für autonom fahrende Fahrzeug aufweist.

11. Computerprogramm, umfassend Programmcode zur Durchführung des Verfahrens nach einem der Ansprüche 1 bis 7, wenn das Computerprogramm auf einer Vorrichtung gemäß Anspruch 8 ausgeführt wird.

## Claims

1. Method for guiding a vehicle (409) in a parking facility, wherein
- a route (601) in the parking facility (303, 401) from a starting position to a target position (501) is ascertained off-board the vehicle (101), wherein
- at least a section of the route (601) is transmitted to the vehicle (409) via a communication network (103), wherein
- while it is driving along the section, the vehicle (409) is monitored for a deviation when it is autonomously driving along the section by means of an off-board monitoring system (207) (105),
- wherein all of the sections of the route (601) are successively sent via the communication network to the vehicle (409), so that the vehicle (409) can drive along the route (601) section by section, with all of the sections forming the complete route (601), wherein
if there is a deviation, a compensation route (901) to compensate for the deviation is ascertained, wherein the compensation route (901) is sent via the communication network to the vehicle (409), so that the vehicle (409) can compensate for the deviation by means of driving along the compensation route (901) and/or
wherein, if there is a deviation, a stop signal is sent via the communication network to the vehicle (409), so that the vehicle (409) can stop in response to receiving the stop signal,
wherein the respective length of the sections is dependent on a degree of difficulty with respect to driving along the section.

2. Method according to Claim 1, wherein a parking entry route for entering and/or a parking exit route for exiting a parking position (305, 403, 501) is or are ascertained off-board the vehicle and is or are sent via the communication network to the vehicle (409), so that the vehicle (409) can autonomously enter or autonomously exit the parking position (305, 403, 501).

3. Method according to one of the preceding claims, wherein a return route back from the target position (501) to the starting position is additionally ascertained off-board the vehicle, wherein at least a section of the return route is sent via the communication network to the vehicle (409), wherein, while it is autonomously driving along the section of the return route, the vehicle (409) is monitored for a deviation when it is autonomously driving along the section by means of the off-board monitoring system (207).

4. Method according to one of the preceding claims, wherein the starting position is a drop-off position (407), at which a driver can leave his vehicle (409) for an automatic parking operation, and the target position (501) is a parking position (303, 403) at which the vehicle (409) can automatically park, or vice versa.

5. Method according to Claim 4, wherein the vehicle (409) is guided from the drop-off position to the parking position and/or vice versa under remote control.

6. Method according to one of the preceding claims, wherein the vehicle (409) autonomously enters the parking position and/or autonomously exits the parking position.

7. Method according to one of the preceding claims, wherein, in the case of an obstacle on the route (601), a drive-around route for driving around the obstacle is ascertained off-board the vehicle, wherein the vehicle (409) is guided around the obstacle on the basis of the drive-around route.

8. Device (201) for guiding a vehicle (409) in a parking facility, comprising:
- a processor (203), which is designed to ascertain a route (601) in the parking facility (303, 401) from a starting position to a target position (501),
- a communication interface (205), which is designed to send at least a section of the route (601) to the vehicle (409) via a communication network, and
- a monitoring system (207), which is designed to monitor the vehicle (409) while it is autonomously driving along the section for a deviation when it is driving along the section,
- wherein all of the sections of the route (601) are successively sent via the communication network to the vehicle (409), so that the vehicle (409) can drive along the route (601) section by section, with all of the sections forming the complete route (601), wherein
- if there is a deviation, a compensation route (901) to compensate for the deviation is ascertained, wherein the compensation route (901) is sent via the communication network to the vehicle (409), so that the vehicle (409) can compensate for the deviation by means of driving along the compensation route (901) and/or
- wherein, if there is a deviation, a stop signal is sent via the communication network to the vehicle (409), so that the vehicle (409) can stop in response to receiving the stop signal,
- wherein the respective length of the sections is dependent on a degree of difficulty with respect to driving along the section.

9. Parking system (301) for vehicles (409), comprising a parking facility which has one or more parking positions (303, 403), and the device (201) according to Claim 8.

10. Parking system (301) according to Claim 9, wherein the parking facility has a reserved area for autonomously driving vehicles.

11. Computer program, comprising program code for carrying out the method according to one of Claims 1 to 7 when the computer program is run on a device according to Claim 8.

## Revendications

1. Procédé de guidage d'un véhicule (409) sur un parc de stationnement,
- un itinéraire (601) sur le parc de stationnement (303, 401) d'une position de départ à une position de destination (501) étant déterminé (101) de façon externe au véhicule,
- au moins une portion de l'itinéraire (601) étant envoyée (103) au véhicule (409) par le biais d'un réseau de communication,
- le véhicule (409) étant surveillé (105) lors du parcours de la portion afin de détecter un écart lors du parcours autonome de la portion au moyen d'un système de surveillance (207) externe au véhicule,
- toutes les portions de l'itinéraire (601) étant successivement envoyées au véhicule (409) par le biais du réseau de communication, de sorte que le véhicule (409) peut parcourir l'itinéraire (601) par portions, toutes les portions formant l'itinéraire complet (601), dans le cas d'un écart, un itinéraire de compensation (901) étant déterminé pour compenser l'écart, l'itinéraire de compensation (901) étant envoyé au véhicule (409) par le biais du réseau de communication, de sorte que le véhicule (409) peut compenser l'écart en parcourant l'itinéraire de compensation (901), et/ou
dans le cas d'un écart, un signal d'arrêt étant envoyé au véhicule (409) par le biais du réseau de communication, de sorte que le véhicule (409) peut s'arrêter en réponse à une réception du signal d'arrêt, la longueur respective des portions dépendant d'un degré de difficulté concernant le parcours de la portion.

2. Procédé selon la revendication 1, un itinéraire d'entrée en stationnement destiné à entrer en stationnement et/ou un itinéraire de sortie de stationnement destiné à sortir de stationnement dans une ou respectivement hors d'une position de stationnement (305, 403, 501) étant déterminé(s) de manière externe au véhicule et envoyé(s) au véhicule (409) par le biais du réseau de communication, de sorte que le véhicule (409) peut entrer en stationnement de manière autonome ou sortir de stationnement de manière autonome dans ou respectivement hors de la position de stationnement (305, 403, 501).

3. Procédé selon l'une des revendications précédentes, un itinéraire de retour étant en plus déterminé de manière externe au véhicule pour le retour depuis la position de destination (501) jusqu'à la position de départ, au moins une portion de l'itinéraire de retour étant envoyée au véhicule (409) par le biais du réseau de communication, le véhicule (409) étant surveillé lors du parcours autonome de la portion de l'itinéraire de retour au moyen du système de surveillance (207) externe au véhicule afin de détecter un écart lors du parcours de la portion.

4. Procédé selon l'une des revendications précédentes, la position de départ étant une position de dépose (407), à laquelle un conducteur peut garer son véhicule (409) pour une opération de stationnement automatique, et la position de destination (501) étant une position de stationnement (303, 403) à laquelle le véhicule (409) peut se garer automatiquement, ou inversement.

5. Procédé selon la revendication 4, le véhicule (409) étant guidé par commande à distance de la position de dépose à la position de stationnement et/ou inversement.

6. Procédé selon l'une des revendications précédentes, le véhicule (409) entrant en stationnement de manière autonome dans la position de stationnement et/ou sortant de stationnement de manière autonome de la position de stationnement.

7. Procédé selon l'une des revendications précédentes, un itinéraire de contournement étant déterminé de manière externe au véhicule dans le cas d'un obstacle sur l'itinéraire (601) afin de contourner l'obstacle, le véhicule (409) étant guidé pour contourner l'obstacle sur la base de l'itinéraire de contournement.

8. Dispositif (201) de guidage d'un véhicule (409) sur un parc de stationnement, comprenant :
- un processeur (203), qui est configuré pour déterminer un itinéraire (601) sur le parc de stationnement (303, 401) d'une position de départ à une position de destination (501),
- une interface de communication (205), qui est configurée pour envoyer au moins une portion de l'itinéraire (601) au véhicule (409) par le biais d'un réseau de communication, et
- un système de surveillance (207) qui est configuré pour surveiller le véhicule (409) lors du parcours autonome de la portion afin de détecter un écart lors du parcours du tronçon,
- toutes les portions de l'itinéraire (601) étant successivement envoyées au véhicule (409) par le biais du réseau de communication, de sorte que le véhicule (409) peut parcourir l'itinéraire (601) par portions, toutes les portions formant l'itinéraire complet (601),
- dans le cas d'un écart, un itinéraire de compensation (901) étant déterminé pour compenser l'écart, l'itinéraire de compensation (901) étant envoyé au véhicule (409) par le biais du réseau de communication, de sorte que le véhicule (409) peut compenser l'écart en parcourant l'itinéraire de compensation (901), et/ou
- dans le cas d'un écart, un signal d'arrêt étant envoyé au véhicule (409) par le biais du réseau de communication, de sorte que le véhicule (409) peut s'arrêter en réponse à une réception du signal d'arrêt,
- la longueur respective des portions dépendant d'un degré de difficulté concernant le parcours de la portion.

9. Système de stationnement (301) pour véhicules (409), comprenant un parc de stationnement qui possède une ou plusieurs positions de stationnement (303, 403), et le dispositif (201) selon la revendication 8.

10. Système de stationnement (301) selon la revendication 9, dans lequel le parc de stationnement comprend une zone réservée pour les véhicules à conduite autonome.

11. Programme informatique, comprenant un code de programme pour mettre en œuvre le procédé selon l'une des revendications 1 à 7 lorsque le programme informatique est exécuté sur un dispositif selon la revendication 8.
